# EUROPÄISCHE PATENTSCHRIFT

(11) **EP 1 801 834 B1**
(45) Veröffentlichungstag und Bekanntmachung des Hinweises auf die Patenterteilung: **16.07.2008**
(21) Anmeldenummer: 05028343.1
(22) Anmeldetag: 23.12.2005
(51) Int. Cl.: H01H 25/04, B60R 1/07

(54) **Multifunktionsschalter, insbesondere für Rückspiegel**
Multifunction switch in particular for a rear view mirror
Commutateur multifonction en particulier pour un retroviseur

(43) Veröffentlichungstag der Anmeldung: 27.06.2007
(73) Patentinhaber: Delphi Technologies, Inc., Troy, Michigan 48007 (US)
(72) Erfinder: Geppert, Michael, 55411 Bingen (DE); Rudolph, Gerd, 55459 Aspisheim (DE); Ellebracht, Christian, 55425 Waldalgesheim (DE)
(74) Vertreter: Becker, Bernd

(56) Entgegenhaltungen:
- EP-A- 0 893 750
- DE-A1- 3 524 439
- DE-A1- 10 339 469
- FR-A- 2 731 090
- US-A1- 2004 070 963
- PATENT ABSTRACTS OF JAPAN Bd. 2000, Nr. 01, 31. Januar 2000 (2000-01-31) & JP 11 288645 A (ICHIKOH IND LTD), 19. Oktober 1999 (1999-10-19)

## Beschreibung

Die Erfindung bezieht sich auf einen Multifunktionsschalter, insbesondere Spiegelverstellschalter für Kraftfahrzeuge, mit einem mit einem Sockel verschließbaren Gehäuse zur Lagerung eines kreuzweise verschwenkbaren und verdrehbaren Betätigungselementes, dem drehfest eine Betätigungsglocke zur Beaufschlagung von vier in gleichen Winkelabständen um eine zu den Schwenkachsen senkrechte Drehachse angeordneten Druckschaltern in Abhängigkeit von seiner Schwenkstellung und ein Drehschaltglied zugeordnet ist.

Die DE 197 56 052 C2 offenbart einen Multifunktionsschalter, insbesondere Spiegelverstellschalter für Kraftfahrzeuge, der ein Gehäuse umfasst, aus dem ein Betätigungselement vorsteht, das mit einem an dem Gehäuse gelagerten Tragzapfen drehfest verbunden und um zwei etwa senkrecht aufeinander stehende Schwenkachsen schwenkbar ist. Vier Schalter sind in gleichen Winkelabständen um eine zu den Schwenkachsen senkrechte Drehachse, um die das Betätigungselement drehbar ist, angeordnet, von denen je nach Schwenkstellung des Betätigungselementes einer betätigbar ist. Im Weiteren ist mindestens ein Schalter vorgesehen, der bei einer Drehung des Betätigungselementes betätigbar ist. Das Betätigungselement ist mit dem Tragzapfen über ein Kreuzgelenk verbunden und um die beiden Schwenkachsen des Kreuzgelenkes schwenkbar gelagert. Der Tragzapfen ist an dem Gehäuse unverschwenkbar um die gehäusefeste Drehachse des Betätigungselementes gelagert. Darüber hinaus ist das Betätigungselement derart ausgebildet, dass es die bei seiner Verschwenkung betätigbaren Schalter unmittelbar beaufschlagt. Zur Bestimmung der Schwenkbarkeit des Betätigungselementes sind gehäusefeste Formflächen vorgesehen, die mit Formflächen des Betätigungselementes zusammenwirken.

Im Weiteren zeigt die DE 103 39 469 A1 einen Multifunktionsschalter mit einem einen Rahmen tragenden Sockel, wobei der der Rahmen zur Lagerung eines kreuzweise verschwenkbaren und verdrehbaren Betätigungselementes dient, das über einen Dreh/Druckschalter drehbar mit einer Betätigungsplatte gekoppelt ist, der Druckschalter in gleichen Winkelabständen um eine zu den Schwenkachsen senkrechte Drehachse zugeordnet sind.

Es ist Aufgabe der Erfindung, einen Multifunktionsschalter der eingangs genannten Art zu schaffen, der einen verhältnismäßig einfachen und somit kostengünstigen Aufbau aufweist.

Erfindungsgemäß wird die Aufgabe dadurch gelöst, dass die Betätigungsglocke einen koaxial zur Drehachse ausgerichteten Zapfen mit einem stirnseitigen Kugelradius und zwei gegenüberliegenden Mitnehmerflächen aufweist, wobei sich der Kugelradius auf einer Kugelpfanne eines zylindrischen, das Drehschaltglied lagernden Führungsansatzes des Sockels abstützt und Mitnehmer des Drehschaltgliedes mit den Mitnehmerflächen des Zapfens zusammenwirken.

Der einstückig mit dem Sockel ausgebildete Führungsansatz dient demnach sowohl zur Lagerung des Drehschaltgliedes als auch gemeinsam mit der Betätigungsglocke zur Lagerung des Betätigungselementes, wobei keine feste Verbindung zwischen dem Betätigungselement und dem Drehschaltglied oder dem Führungsansatz vorhanden ist, so dass der Multifunktionsschalter relativ einfach und kostengünstig aufgebaut ist. Selbstverständlich weist das Gehäuse eine zur Lagerung der Betätigungsglocke geeignete Kontur auf.

Zur Kopplung des Betätigungselementes mit der Betätigungsglocke ist ein Befestigungsansatz des Betätigungselementes in eine Halteausnehmung der Betätigungsglocke eingegeklipst.

In den Schwenkschaltstellungen des Betätigungselementes beaufschlagt vorzugsweise die Betätigungsglocke in dem Gehäuse verschiebbar gelagerte, den Druckschaltern zugeordnete Betätiger. Die Betätiger gewährleisten eine geradlinige und großflächige Betätigung der zugeordneten Druckschalter.

Um eine kompakte Bauform zu erzielen, sind zweckmäßigerweise die Druckschalter auf einer den Sockel überspannenden Leiterplatte angeordnet. Die Leiterplatte steht über entsprechende Anschlusskontakte mit dem Bordnetz des Kraftfahrzeuges in Verbindung.

Damit ein Benutzer des Multifunktionsschalters eine taktil erfassbare Rückmeldung bei der Beaufschlagung des Druckschalters erhält, sind vorteilhafterweise die Druckschalter als Kontaktplättchen aufnehmende Schaltdome ausgebildet.

In Ausgestaltung ist das Drehschaltglied unterhalb der Leiterplatte im Sockel untergebracht und umfasst zwei Kontaktelemente zur Beaufschlagung zugeordneter Kontaktflächen einer Platine. Mit den dem Drehschaltglied zugeordneten Schaltfunktionen lässt sich beispielsweise ein rechter oder linker Rückblickspiegel zur Verstellung auswählen. Im Weiteren ist es möglich, dem Drehschaltglied eine weitere Schaltfunktion, insbesondere für das Beiklappen eines Rückblickspiegels auf der Fahrerseite eines Kraftfahrzeuges, zuzuordnen, die vorzugsweise in einer getasteten Schaltstellung auszuführen ist. Zweckmäßigerweise liegt die Platine unmittelbar an der Leiterplatte an. Selbstverständlich kann die Platine auch einstückig mit der Leiterplatte verbunden sein und kontaktiert über zugeordnete Anschlüsse das Bordnetz.

Zur Bewerkstelligung eines zuverlässigen Öffnens und Schließens von Strompfaden sind bevorzugt die Kontaktelemente als federbeaufschlagte Kontaktrollen ausgeführt.

Um sowohl verrastete als auch getastete Drehschaltstellungen zu realisieren, umfasst vorzugsweise das Drehschaltglied eine federbeaufschlagte Rasthülse für die Drehschaltstellungen. Zweckmäßigerweise erstreckt sich die Rasthülse senkrecht zur Drehachse und wirkt mit einer am Umfang des Sockels ausgebildeten Schaltkurve zusammen.

Vorteilhafterweise sind die Mitnehmer des Drehschaltgliedes am freien Ende einer Führungsbuchse des Drehschaltgliedes sich gegenüberliegend in Richtung der Drehachse erstreckend angeformt und weisen einen an den Mitnehmerflächen des Zapfens anliegenden Radius auf. Die Radien an den Mitnehmern stellen sicher, dass das Betätigungselement entsprechende Schwenkbewegungen ausführen kann. Für die kreuzweisen Schwenkbewegungen des Betätigungselementes ist es zusätzlich erforderlich, dass in die Führungsbuchse um 90° zu den Mitnehmern versetzte Freimachungen für den Zapfen eingelassen sind.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispieles unter Bezugnahme auf die zugehörigen Zeichnungen näher erläutert. Es zeigt:

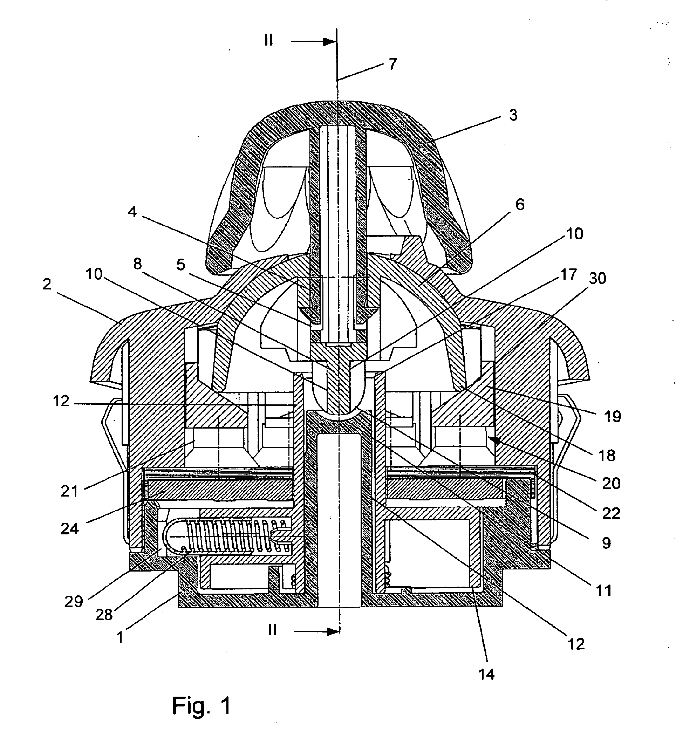

- Fig.1: eine Schnittdarstellung des erfindungsgemäßen Multifunktionsschalters und

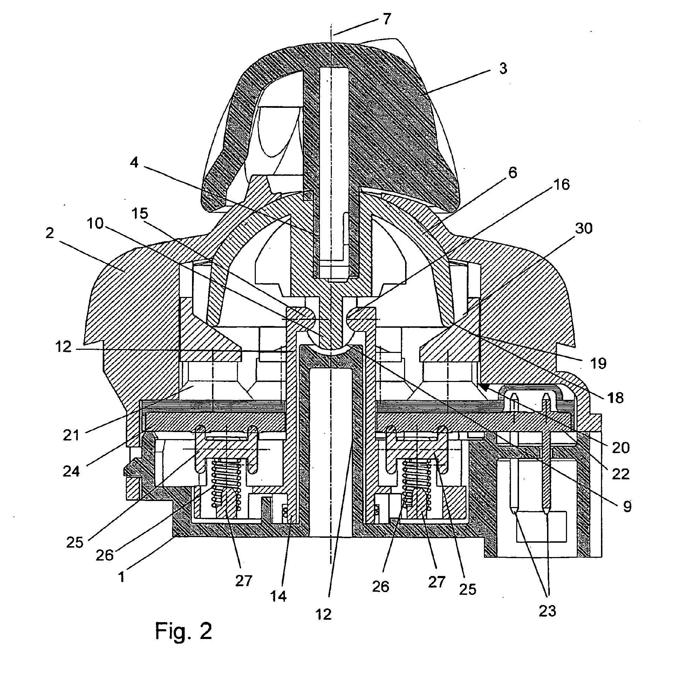

- Fig.2: eine Schnittdarstellung gemäß der Linie II-II nach Fig. 1.

Der als Spiegelverstellschalter ausgebildete Multifunktionsschalter umfasst ein mit einem Sockel 1 verschließbares Gehäuse 2, aus dem ein kreuzweise verschwenkbares sowie verdrehbares Betätigungselement 3 herausgeführt ist, das mit seinem angeformten Befestigungsansatz 4 in eine Halteausnehmung 5 einer in dem Gehäuse 2 gelagerten Betätigungsglocke 6 eingegeklipst ist. Die Betätigungsglocke 6 umfasst einen koaxial zu einer Drehachse 7 des Betätigungselementes 3 ausgerichteten Zapfen 8 mit einem stirnseitigen Kugelradius 9 und zwei gegenüberliegenden Mitnehmerflächen 10. Der Kugelradius 9 des Zapfens der Betätigungsglocke 6 stützt sich auf einer Kugelpfanne 11 eines an dem Sockel 1 angeformten zylindrischen Führungsansatzes 12 ab, auf dem eine Führungsbuchse 13 eines Drehschaltgliedes 14 gelagert ist.

An dem dem Betätigungselement 3 zugeordneten freien Ende der Führungsbuchse 12 des Drehschaltgliedes 14 sind Mitnehmer 15 angeformt, die sich diametral gegenüberliegend in Richtung der Drehachse 7 erstrecken und jeweils einen Radius 16 zur Anlage an der zugeordneten Mitnehmerfläche 10 des Zapfens 8 der Betätigungsglocke 6 aufweisen. Im Weiteren sind in die Führungsbuchse 12 um 90° zu den Mitnehmern 15 versetzte Freimachungen 17 für den Zapfen 10 eingelassen, die entsprechende Schwenkbewegungen des Betätigungselementes 3 ermöglichen.

Einem umfangsseitigen Rand 18 der Betätigungsglocke 6 sind in dem Gehäuse 2 verschiebbar gelagerte Betätiger 19 zugeordnet, die bei einer Verschenkung des Betätigungselementes 3 zugeordnete Druckschalter 20 beaufschlagen, die in jeder der Verschwenkrichtungen des Betätigungselementes 3 als Kontaktplättchen aufnehmende Schaltdome 21 auf einer den Sockel 1 überspannenden Leiterplatte 22 in gleichen Winkelabständen um die Drehachse 7 angeordnet sind. Unterhalb der mit Anschlusskontakten 23 zusammenwirkenden Leiterplatte 22 ist eine über die Anschlusskontakte 23 elektrisch kontaktierte Platine 24 mit Kontaktflächen angeordnet, wobei die Kontaktflächen von Kontaktrollen 25 des Drehschaltgliedes 14 beaufschlagt werden. Die Kontaktrollen 25 sind durch Druckfedern 26 gegen die Platine 24 vorgespannt und auf zur Drehachse 7 beabstandeten Auslegern 27 des Drehschaltgliedes 14 angeordnet. Für die unterschiedlichen Drehschaltstellungen ist dem Drehschaltglied 14 eine federbeaufschlagte Rasthülse 28 zugeordnet, die sich senkrecht zur Drehachse 7 erstreckt und mit einer am Umfang des Sockels 1 ausgebildeten Schaltkurve 29 zusammenwirkt.

Durch eine Drehung des.Betätigungselementes 3 lässt sich in einer ersten verrasteten Schaltstellung ein linker Rückblickspiegel und in einer zweiten verrasteten Schaltstellung ein rechter Rückblickspiegel eines Kraftfahrzeuges zur Einstellung auswählen. Im Weiteren ist in getasteten Schaltstellungen der fahrerseitige Rückblickspiegel an das Kraftfahrzeug anklappbar bzw. von diesem wegklappbar. Die Drehbewegung des Betätigungselementes 3 wird über dessen Befestigungsansatz 4 sowie die Betätigungsglocke 6 mit ihrem Zapfen 8 auf die Mitnehmer 15 der Führungsbuchse 13 des Drehschaltgliedes 14 übertragen. Beim Verschwenken des Betätigungselementes 3 wird die Betätigungsglocke 6 entsprechend mitbewegt, da das Betätigungselement 3 über seinen Befestigungsansatz 4 fest mit dieser verbunden ist, und der Kugelradius 9 an dem freien Ende des Zapfens 8 gleitet in der Kugelpfanne 11 des Führungsansatzes 12 des Sockels. Mit dem Rand 18 kommt die Betätigungsglocke 6 auf einer schiefen Ebene 30 des entsprechenden Betätigers 19 zur Auflage und drückt diesen in einer weitergehenden Schwenkbewegung in Richtung des Sockels 1 zur Beaufschlagung des entsprechenden Druckschalters 20. Nach dem Loslassen des Betätigungselementes 2 kehrt dieses aufgrund der Rückstellkraft der Schaltdome 21 in seine Ausgangslage zurück.

## Patentansprüche

1. Multifunktionsschalter, insbesondere Spiegelverstellschalter für Kraftfahrzeuge, mit einem mit einem Sockel (1) verschließbaren Gehäuse (2) zur Lagerung eines kreuzweise verschwenkbaren und verdrehbaren Betätigungselementes (3), dem drehfest eine Betätigungsglocke (6) zur Beaufschlagung von vier in gleichen Winkelabständen um eine zu den Schwenkachsen senkrechte Drehachse (7) angeordneten Druckschaltern (20) in Abhängigkeit von seiner Schwenkstellung und ein Drehschaltglied (14) zugeordnet ist, **dadurch gekennzeichnet, dass** die Betätigungsglocke (6) einen koaxial zur Drehachse (7) ausgerichteten Zapfen (8) mit einem stirnseitigen Kugelradius (9) und zwei gegenüberliegenden Mitnehmerflächen (10) aufweist, wobei sich der Kugelradius (9) auf einer Kugelpfanne (11) eines zylindrischen, das Drehschaltglied (14) lagernden Führungsansatzes (12) des Sockels (1) abstützt und Mitnehmer (15) des Drehschaltgliedes (14) mit den Mitnehmerflächen (10) des Zapfens (8) zusammenwirken.

2. Multifunktionsschalter nach Anspruch 1, **dadurch gekennzeichnet, dass** ein Befestigungsansatz (4) des Betätigungselementes (3) in eine Halteausnehmung (5) der Betätigungsglocke (6) eingegeklipst ist.

3. Multifunktionsschalter nach Anspruch 1 oder 2, **dadurch gekennzeichnet, dass** die Betätigungsglocke (6) in dem Gehäuse (2) verschiebbar gelagerte, den Druckschaltern (20) zugeordnete Betätiger (19) beaufschlagt.

4. Multifunktionsschalter nach einem der Ansprüche 1 bis 3, **dadurch gekennzeichnet, dass** die Druckschalter (20) auf einer den Sockel (1) überspannenden Leiterplatte (22) angeordnet sind.

5. Multifunktionsschalter nach einem der Ansprüche 1 bis 4, **dadurch gekennzeichnet, dass** die Druckschalter (20) als Kontaktplättchen aufnehmende Schaltdome (21) ausgebildet sind.

6. Multifunktionsschalter nach einem der Ansprüche 1 bis 5, **dadurch gekennzeichnet, dass** das Drehschaltglied (14) unterhalb der Leiterplatte (22) im Sockel (1) untergebracht ist und zwei Kontaktelemente zur Beaufschlagung zugeordneter Kontaktflächen einer Platine (24) umfasst.

7. Multifunktionsschalter nach Anspruch 6, **dadurch gekennzeichnet, dass** die Platine (24) unmittelbar an der Leiterplatte (22) anliegt.

8. Multifunktionsschalter nach Anspruch 6, **dadurch gekennzeichnet, dass** die Kontaktelemente als federbeaufschlagte Kontaktrollen (25) ausgeführt sind.

9. Multifunktionsschalter nach einem der Ansprüche 1 bis 8, **dadurch gekennzeichnet, dass** das Drehschaltglied (14) eine federbeaufschlagte Rasthülse (28) für die Drehschaltstellungen umfasst.

10. Multifunktionsschalter nach Anspruch 9, **dadurch gekennzeichnet, dass** sich die Rasthülse (28) senkrecht zur Drehachse (7) erstreckt und mit einer am Umfang des Sockels (1) ausgebildeten Schaltkurve (29) zusammenwirkt.

11. Multifunktionsschalter nach Anspruch 1, **dadurch gekennzeichnet, dass** die Mitnehmer (15) des Drehschaltgliedes (14) am freien Ende einer Führungsbuchse (13) des Drehschaltgliedes (14) sich gegenüberliegend in Richtung der Drehachse (7) erstreckend angeformt sind und einen an den Mitnehmerflächen (10) des Zapfens (8) anliegenden Radius (16) aufweisen.

12. Multifunktionsschalter nach einem der Ansprüche 1 bis 8, **dadurch gekennzeichnet, dass** in die Führungsbuchse (13) um 90° zu den Mitnehmern (15) versetzte Freimachungen (17) für den Zapfen (8) eingelassen sind.

## Claims

1. Multifunctional switch, in particular a mirror adjusting switch for motor vehicles having a housing (2) sealable by a base (1) for mounting a crosswise pivotable and rotatable actuating element (3) associated in a manner fixed to rotation with an actuating roll (6), for acting upon four pushbutton switches (20) arranged at equal angular spacings about an axis of rotation (7) perpendicular to the pivot axes as a function of its pivot position, and a rotary switching member (14), **characterised in that** the actuating roll (6) comprises a peg (8) aligned coaxially with the axis of rotation (7) having a spherical radius (9) on the end face and two opposite entrainer surfaces (10), wherein the spherical radius (9) is supported on a spherical cup (11) of a cylindrical guide extension (12) of the base (1) acting as bearing for the rotary switching member (14) and entrainers (15) of the rotary switching member (14) act in conjunction with the entrainer surfaces (10) of the peg (8).

2. Multifunctional switch according to claim 1, **characterised in that** a fastening extension (4) of the actuating element (3) is clipped into a retaining recess (5) of the actuating roll (6).

3. Multifunctional switch according to claim 1 or 2, **characterised in that** the actuating roll (6) acts upon actuators (19) mounted displaceably in the housing (2) and associated with the pushbutton switches (20).

4. Multifunctional switch according to any of claims 1 to 3, **characterised in that** the pushbutton switches (20) are arranged on a printed circuit board (22) spanning the base (1).

5. Multifunctional switch according to any of claims 1 to 4, **characterised in that** the pushbutton switches (20) are constructed in the form of switching domes (21) accommodating contact platelets.

6. Multifunctional switch according to any of claims 1 to 5, **characterised in that** the rotary switching member (14) is accommodated underneath the printed circuit board (22) in the base (1) and comprises two contact elements for acting upon associated contact surfaces of a plate (24).

7. Multifunctional switch according to claim 6, **characterised in that** the plate (24) fits directly against the printed circuit board (22).

8. Multifunctional switch according to claim 6, **characterised in that** the contact elements are constructed in the form of spring-loaded contact rollers (25).

9. Multifunctional switch according to any of claims 1 to 8, **characterised in that** the rotary switching member (14) comprises a spring-loaded stop sleeve (28) for the rotary switching positions.

10. Multifunctional switch according to claim 9, **characterised in that** the stop sleeve (28) extends at right angles to the axis of rotation (7) and acts in conjunction with a switching curve (29) constructed at the periphery of the base (1).

11. Multifunctional switch according to claim 1, **characterised in that** the entrainers (15) of the rotary switching member (14) are moulded in place at the free end of a guide bush (13) of the rotary switching member (14) extending opposite one another in the direction of the axis of rotation (7) and have a radius (16) resting against the entrainer surfaces (10) of the peg (8).

12. Multifunctional switch according to any of claims 1 to 8, **characterised in that** clearances (17) for the pegs (8) offset by 90° to the entrainers (15) are let into the guide bush (13).

## Revendications

1. Commutateur multifonction, en particulier commutateur de réglage de rétroviseur pour véhicules automobiles, comportant un boîtier (2), pouvant être fermé avec un socle (1), pour recevoir un élément d'actionnement (3) rotatif et basculant en croix, auquel est associée de manière solidaire en rotation une cloche d'actionnement (6) pour solliciter quatre contacts à pression (20) disposés à égale distance angulaire autour d'un axe de rotation (7) perpendiculaire aux axes de basculement en fonction de sa position de basculement et un élément d'interrupteur rotatif (14), **caractérisé en ce que** la cloche d'actionnement (6) présente un tenon (8) orienté coaxialement à l'axe de rotation (7) avec un rayon sphérique (9) côté frontal et deux surfaces d'entraînement (10) opposées, le rayon sphérique (9) s'appuyant sur une cuvette sphérique (11) d'un embout de guidage (12) cylindrique logeant l'élément d'interrupteur rotatif (14) du socle (1) et des doigts d'entraînement (15) de l'élément d'interrupteur rotatif (14) coopérant avec les surfaces d'entraînement (10) du tenon (8).

2. Commutateur multifonction selon la revendication 1, **caractérisé en ce qu'**un embout de fixation (4) de l'élément d'actionnement (3) est clipsé dans un évidement de retenue (5) de la cloche d'actionnement (6).

3. Commutateur multifonction selon la revendication 1 ou 2, **caractérisé en ce que** la cloche d'actionnement (6) sollicite des actionneurs (19) associés aux contacts à pression (20) et logés de manière mobile dans le boîtier (2).

4. Commutateur multifonction selon l'une quelconque des revendications 1 à 3, **caractérisé en ce que** les contacts à pression (20) sont disposés sur une plaquette à circuit imprimé (22) enjambant le socle (1).

5. Commutateur multifonction selon l'une quelconque des revendications 1 à 4, **caractérisé en ce que** les contacts à pression (20) sont réalisés sous forme de dômes de commutation (21) recevant les plaquettes de contact.

6. Commutateur multifonction selon l'une quelconque des revendications 1 à 5, **caractérisé en ce que** l'élément d'interrupteur rotatif (14) est logé sous la plaquette à circuit imprimé (22) dans le socle (1) et comprend deux éléments de contact pour solliciter des surfaces de contact associées d'une platine (24).

7. Commutateur multifonction selon la revendication 6, **caractérisé en ce que** la platine (24) s'appuie directement contre la plaquette à circuit imprimé (22).

8. Commutateur multifonction selon la revendication 6, **caractérisé en ce que** les éléments de contact sont réalisés sous forme de galets de contact (25) sollicités par ressort.

9. Commutateur multifonction selon l'une quelconque des revendications 1 à 8, **caractérisé en ce que** l'élément d'interrupteur rotatif (14) comprend une douille d'arrêt (28) sollicitée par ressort pour les positions de l'interrupteur rotatif.

10. Commutateur multifonction selon la revendication 9, **caractérisé en ce que** la douille d'arrêt (28) s'étend perpendiculairement à l'axe de rotation (7) et coopère avec une came de commutation (29) réalisée sur la périphérie du socle (1).

11. Commutateur multifonction selon la revendication 1, **caractérisé en ce que** les doigts d'entraînement (15) de l'élément d'interrupteur rotatif (14) sont formés sur l'extrémité libre d'une douille de guidage (13) de l'élément d'interrupteur rotatif (14) en s'étendant en face dans le sens de l'axe de rotation (7) et présentent un rayon (16) s'appuyant contre les surfaces d'entraînement (10) du tenon (8).

12. Commutateur multifonction selon l'une quelconque des revendications 1 à 8, **caractérisé en ce que** des évidements (17) pour les tenons (8) décalés de 90° par rapport aux doigts d'entraînement (15) sont pratiqués dans la douille de guidage (13).
